# EUROPÄISCHE PATENTSCHRIFT

(11) **EP 2 567 997 B1**
(45) Veröffentlichungstag und Bekanntmachung des Hinweises auf die Patenterteilung: **14.11.2018**
(21) Anmeldenummer: 11180557.8
(22) Anmeldetag: 08.09.2011
(51) Int. Cl.: C08G 69/14, C08G 69/18, C08G 69/20, C08K 5/00, C08L 77/02

(54) **Neue Zusammensetzungen zur Herstellung von Gusspolyamiden**
New compounds for producing poured polyamides
Nouvelles compositions pour la fabrication de polyamides de fonte

(43) Veröffentlichungstag der Anmeldung: 13.03.2013
(73) Patentinhaber: LANXESS Deutschland GmbH, 50569 Köln (DE)
(72) Erfinder: Kügler, Andreas, 68199 Mannheim (DE); Eckert, Armin, 68794 Oberhausen (DE); Laufer, Wilhelm, Dr., 67158 Ellerstadt (DE); Witt, Michael, Dr., 95488 Eckersdorf (DE); Joachimi, Detlev, Dr., 47800 Krefeld (DE); Markgraf, Günter, Dr., 41539 Dormagen (DE); Früh, Thomas, Dr., 42105 Wuppertal (DE)

(56) Entgegenhaltungen:
- EP-A2- 2 093 246
- DE-A1- 4 328 882

## Beschreibung

Die vorliegende Erfindung betrifft neue Zusammensetzungen zur Herstellung von Gusspolyamiden.

Bei der Herstellung von Gusspolyamiden wird ein Lactam zusammen mit mindestens einem Katalysator und mindestens einem Aktivator in eine Form überführt und dann in dieser Form anionisch polymerisiert. Die in der Form vorliegenden Ausgangsverbindungen polymerisieren dabei im Allgemeinen unter der Einwirkung von Wärme. Dabei entsteht ein homogener Werkstoff, welcher extrudierte Polyamide im Hinblick auf die Kristallinität und die mechanischen Eigenschaften übertrifft.

Gusspolyamide sind als thermoplastische Kunststoffe für die Fertigung komplexer Bauteile geeignet. Sie müssen im Gegensatz zu vielen anderen Thermoplasten nicht aufgeschmolzen werden, sondern entstehen durch eine anionische Polymerisation von einem Lactam in einer Form bei 120 bis 150°C bereits in wenigen Minuten. Dabei können alle bekannten Gießverfahren, wie Standguss, Spritzguss, Rotations- und Schleuderguss, angewendet werden. Als Endprodukt erhält man jeweils Formteile aus einem hochmolekularen, kristallinen Polyamid, das sich durch ein niedriges Gewicht, eine hohe mechanische Belastbarkeit, sehr gute Gleiteigenschaften und eine hervorragende Chemikalienbeständigkeit auszeichnet und das nur geringe innere Spannungen aufweist.

Gusspolyamide lassen sich Sägen, Bohren, Fräsen, Schleifen, Verschweißen und Bedrucken oder Lackieren; neben komplexen Hohlformen werden aus diesem Polymer beispielsweise auch Rollen für Personenaufzüge und Halbzeuge, wie zum Beispiel Rohre, Stäbe und Platten für den Maschinenbau und die Automobilindustrie gefertigt. Auch die Herstellung von Faserverbundkunststoffen mittels anionischer in-situ Lactampolymerisation ist an sich bekannt, siehe beispielsweise: P. Wagner, Verarbeitung von Caprolactam zu Polyamid-Formteilen nach dem RIM-Verfahren, Kunststoffe 73 (10), Seiten 588-590 (1983).

Die Herstellung von Gusspolyamidteilen, ausgehend von niedrig viskosen Lactamschmelzen und einem Katalysator sowie einem Aktivator durch die sogenannte aktivierte Polymerisation ist an sich bekannt. Zu diesem Zweck werden üblicherweise zwei Mischungen aus Katalysator und Lactam bzw. Aktivator und Lactam in Form einer flüssigen Schmelze frisch vor der Polymerisation getrennt voneinander hergestellt, unmittelbar miteinander vermischt und anschließend in einer Gussform polymerisiert (siehe EP2093246). Die getrennte Vorbereitung von Monomer mit Aktivator und Monomer mit Katalysator soll sicherstellen, dass es im Vorfeld zu keiner unerwünschten Reaktion kommt. Dies erfordert auch eine separate Aufbewahrung von Aktivator, Katalysator und Lactam und verursacht damit hohen apparativen Aufwand. Da die Katalysatoren/Aktivatoren nur in geringen Mengen benötigt werden, ist die Dosierung schwierig. Ungenaue Dosierung führt zu großen Schwankungen in der Produktqualität und somit zu Fehlchargen. Zudem leidet sowohl der Aktivator als auch der Katalysator bei mehrfachem Inkontaktbringen mit Luft und Feuchtigkeit. Auch unter den Gesichtspunkten der Arbeitshygiene ist es daher wünschenswert, Aktivator und/oder Katalysator auf eine andere und sicherere Art bereitzustellen.

Eine Aufgabe der vorliegenden Erfindung bestand somit darin, lagerfähige Zusammensetzungen bereitzustellen, in denen Katalysator bzw. Aktivator mit mindestens einem Lactam oder Katalysator, Aktivator und Lactam in lagerfähiger Form vorliegen und welche sich zur Herstellung von Gußpolymeren eignen. Lagerfähig im Sinne der Erfindung bedeutet, dass diese Zusammensetzungen nach einer mehrwöchigen Lagerung, bevorzugt einer mehr als 20 tägigen Lagerung, noch immer zur Herstellung von Gußpolymeren einsetzbar sind. Idealerweise beträgt der Restmonemerengehalt im Gußpolyamid weniger als 1 Gew.-%.

Überraschenderweise wurde nun gefunden, dass erstarrte Lactamschmelzen mit bestimmten Aktivatoren und erstarrte Lactamschmelzen mit bestimmten Katalysatoren und/oder Lactamschmelzen mit bestimmten Aktivatoren und Katalysatoren dieses Kriterium erfüllen und nur eine geringe Zahl an Apparaten/Tanks für die Herstellung der Gusspolyamidteile und die Lagerung der dafür benötigten Rohmaterialien erfordert.

Gegenstand der vorliegenden Erfindung sind daher Zusammensetzungen, enthaltend
mindestens eine der folgenden Kombinationen
aus a), b) und c)
a) und b),
b) und c),
a) und c) sowie
c) alleine, wobei

a) für erstarrte Lactamschmelzen mit 0,1 - 5 Gew.-%, vorzugsweise 0,2 - 2 Gew.-%, besonders bevorzugt 0,5 - 1,5 Gew.-% mindestens eines polymeren Carbodiimids, vorzugsweise mindestens eines polymeren aromatischen Carbodiimids, und/oder mindestens einem Uretdions,
b) für erstarrte Lactamschmelzen mit 0,2 - 5 Gew.-% Katalysator, ausgewählt aus der Gruppe: Lactam-Magnesium-Halogenid, Alkali-Alumo-Dilactamat, Alkali- und/oder Erdalkalilactamat und
c) für erstarrte Lactamschmelzen mit 0,2 - 5 Gew.-% Katalysator ausgewählt aus der Gruppe: Lactam-Magnesium-Halogenid, Alkali-Alumo-Dilactamat, Alkali- und/oder Erdalkalilactamat und 0,1 - 5 Gew.-% mindestens eines polymeren Carbodiimids, vorzugsweise mindestens eines polymeren aromatischen Carbodiimids, und/oder mindestens eines Uretdions gegebenenfalls in Kombination mit weiterer erstarrter Lactamschmelze b)
   steht.

Die erstarrten Lactamschmelzen im Sinne der Erfindung sind vorzugsweise bei Temperaturen < 70°C amorph oder kristallin. Die erstarrten Lactamschmelzen können dabei als Pulver, Pastillen, Granulate und/oder Schuppen anfallen oder in diese umgearbeitet werden.

Dabei kommen alle gängigen Konfektionierungsverfahren, bevorzugt Pulverisierungs-, Pastillierungs- Abschuppungs- oder Granulierungs-Verfahren in Frage. Hierfür sind kommerziell erhältliche Apparate einsetzbar, bevorzugt Mischer-Granulatoren und Mischer, erhältlich z.B. bei der Firma Lödige Process Technology, Pastillierbänder oder Schuppenwalzen erhältlich z.B. bei der Firma Sandvik Holding GmbH oder der Firma GMF Gouda.

Als Lactam im Sinne der Erfindung wird bevorzugt mindestens eine Verbindung der allgemeinen Formel (I) 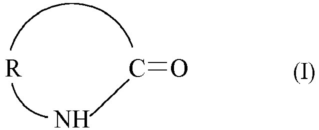 eingesetzt, wobei R eine Alkylengruppe mit 3 bis 13 Kohlenstoffatomen darstellt. Bevorzugt handelt es sich dabei um Caprolactam und/oder Laurinlactam. Diese sind kommerziell erhältlich z.B. bei der Firma Lanxess Deutschland GmbH. Ganz besonders bevorzugt wird Caprolactam eingesetzt.

Uretdione im Sinne der Erfindung sind Umsetzungsprodukte von mindestens zwei Isocyanaten unter der Ausbildung von Dioxodiazetidin-Bindungen:

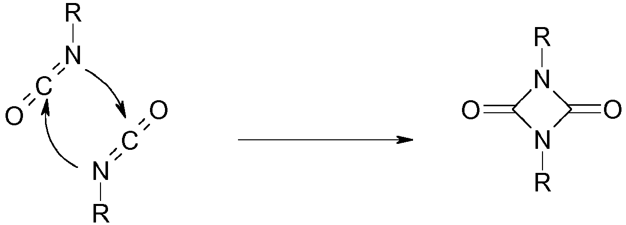

Die Herstellung ist dem Fachmann an sich bekannt und kann beispielsweise gemäß der in EP 1 422 223 A1 beschriebenen Verfahren vorgenommen werden.

Das Uretdion kann ein Dimer, Trimer, Oligomer oder Polymer sein. Geeignete Beispiele für Uretdione sind dem Fachmann an sich bekannt. Bevorzugte Uretdione sind 2,4-Diisocyanatotoluol (TDI) -Uretdion (2,4-Dioxo-1,3-diazetidin-1,3-bis(3-methyl-m-phenylen)diisocyanat), Diphenylmethan-4,4'-diisocyanat (MDI) -Uretdion (Bis(4-((4-isocyanatophenyl)methyl)phenyl)-1,3-diazetidine-2,4-dion) oder Hexamethylen-1,6-diisocyanat (HDI) -Uretdion (1,3-bis(6-isocyanatohexyl)-1,3 -diazeditin-2,4-dion).

Die vorgenannten Verbindungen sind handelsüblich und sind beispielsweise unter den Produktnamen Addolink® bzw. Addonyl® TT bei der Firma Rhein Chemie Rheinau GmbH oder unter den Produktnamen Desmodur® der Bayer MaterialScience AG erhältlich.

Weitere Beispiele für Uretdione, die ausgehend von einem aliphatischen oder aromatischen Isocyanat erhalten werden, weisen vorzugsweise 6 bis 20 Kohlenstoffatome, besonders bevorzugt 6 bis 15 Kohlenstoffatome, auf. Entsprechende aromatische monomere Isocyanate können beispielsweise ausgewählt werden aus der Gruppe, bestehend aus 2,6-Diisocyanatotoluol, 2,4-Methylen-bis(phenyldiisocyanat), 1,5-Naphthylendiisocyanat, N,N'-Bis-(4-methyl-3-isocyanatophenyl)-Harnstoff und Tetramethylxylylendiisocyanat.

Entsprechende aliphatische monomere Isocyanate werden vorzugsweise ausgewählt aus der Gruppe, bestehend aus Isophorondiisocyanat, 1,4-Cyclohexyldiisocyanat, 1,1-Methylen-bis-(4-isocyanatocyclohexan), 1,2-Bis-(4-isocyanatononyl)-3 -heptyl-4-pentyl-cyclohexan.

Polymere Carbodiimide im Sinne der Erfindung sind vorzugsweise Verbindungen der Formel (II)

R¹-(-N=C=N-R²-)ₘ-R³ (II),

in der
m einer ganzen Zahl von 2 bis 500, bevorzugt 2 bis 50, ganz besonders bevorzugt 2 bis 20 entspricht,
R¹ = R²-NCO, R²-NHCONHR⁴, R²-NHCONR⁴R⁵ oder R²-NHCOOR⁶,
R² = C₁ - C₁₈-Alkylen, C₅-C₁₈-Cycloalkylen-, Arylen und/oder C₇-C₁₈- Aralkylen, vorzugsweise Arylen und/oder C₇-C₁₈- Aralkylen und
R³ = -NCO, -NHCONHR⁴, -NHCONR⁴R⁵ oder -NHCOOR⁶ ist,
wobei in R¹ unabhängig voneinander R⁴ und R⁵ gleich oder verschieden sind und einen C₁-C₆-Alkyl-, C₆-C₁₀-Cycloalkyl- oder C₇-C₁₈-Aralkylrest darstellen und R⁶ eine der Bedeutungen von R¹ hat oder einen Polyester- oder einen Polyamidrest oder -(CH₂)ₕ-O-[(CH₂)ₖ-O]_{g} -R⁴ bedeutet,
mit l = 1-3, k= 1-3, g = 0-12 und
R⁴= H oder C₁-C₄-Alkyl.

Ebenfalls einsetzbar sind auch Gemische von polymeren Carbodiimiden der Formel (II).

Die Verbindungen nach Formel (II) sind kommerziell erhältlich, z.B. bei der Firma Rhein Chemie Rheinau GmbH oder lassen sich nach den dem Fachmann geläufigen Verfahren herstellen, wie z.B. beschrieben in DE-A-11 30 594 oder US 2 840 589 oder durch die Kondensation von Diisocyanaten, bevorzugt 2,4,6-Triisopropylphenyl-1,3-diisocyanat, 2,4,6-Triethylphenyl-1,3-diisocyanat, 2,4,6-Trimethyl-phenyl-1,3-diisocyanat, 2,4'-Diisocyanatodiphenylmethan, 3,3',5,5'-Tetraisopropyl-4,4'-diisocyanatodiphenylmethan, 3,3',5,5'-Tetraethyl-4,4'-diisocyanato-diphenyl-methan, Tetramethylxyloldiisocyanat, 1,5-Naphthalindiisocyanat, 4,4'-Diphenylmethandiisocyanat, 4,4'-Diphenyldimethyl-methan-diisocyanat, 1,3-Phenylendiisocyanat, 1,4-Phenylendiisocyanat, 2,4-Tolylendiisocyanat, 2,6-Tolylendiisocyanat, ein Gemisch aus 2,4-Tolylendiisocyanat und 2,6-Tolylendiisocyanat, Hexamethylendiisocyanat, Cyclohexan-1,4-diisocyanat, Xylylendiisocyanat, Isophorondiisocyanat, Dicyclohexylmethan-4,4'-di-isocyanat, Methylcyclohexandiisocyanat, Tetramethylxylylen-diisocyanat sowie 1,3,5-Triisopropylbenzol-2,4-diisocyanat oder deren Gemische, unter Abspaltung von Kohlendioxid bei erhöhten Temperaturen, bevorzugt bei 40 °C bis 200°C, in Gegenwart von Katalysatoren. Als Katalysatoren haben sich bevorzugt starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Als Katalysatoren für die anionische Polymerisation von Lactamen im Sinne der Erfindung können Lactam-Magnesium-Halogenide, bevorzugt Bromide, Alkali-Alumo Dilactamate, bevorzugt Natrium, Alkali- und/oder Erdalkalilactamate, bevorzugt Natrium, Kalium und/oder Magnesium, einzeln oder im Gemisch eingesetzt werden.

Die vorgenannten Katalysatoren sind handelsüblich und sind beispielsweise bei der Firma Rhein Chemie Rheinau GmbH oder bei der Firma KatChem spol.s.r.o. erhältlich.

In einer bevorzugten Ausführungsform der Erfindung werden Mischungen aus a) und b) bei Temperaturen zwischen 80 und 200°C, vorzugsweise 80 und 190°C, besonders bevorzugt 80 bis 160 °C, insbesondere bevorzugt 100 bis 160 °C zur Polymerisation gebracht.

In einer ebenfalls bevorzugten Ausführungsform der Erfindung werden Mischungen aus a), b) und c) zwischen 80 und 200°C, vorzugsweise 80 und 190°C, besonders bevorzugt 80 bis 160 °C, insbesondere bevorzugt 100 bis 160 °C zur Polymerisation gebracht.

In einer weiteren bevorzugten Ausführungsform der Erfindung wird c) bei Temperaturen zwischen 80 und 200°C, vorzugsweise 80 und 190°C, besonders bevorzugt 80 bis 160 °C, insbesondere bevorzugt 100 bis 160 °C zur Polymerisation gebracht.

In einer weiteren bevorzugten Ausführungsform der Erfindung werden Mischungen aus a) und c) bei Temperaturen zwischen 80 und 200°C, vorzugsweise 80 und 190°C, besonders bevorzugt 80 bis 160 °C, insbesondere bevorzugt 100 bis 160 °C zur Polymerisation gebracht.

In einer weiteren bevorzugten Ausführungsform der Erfindung werden Mischungen aus b) und c) bei Temperaturen zwischen 80 und 200°C, vorzugsweise 80 und 190°C, besonders bevorzugt 80 bis 160 °C, insbesondere bevorzugt 100 bis 160 °C zur Polymerisation gebracht.

Die jeweilige Polymerisation erfolgt nach den, dem Fachmann geläufigen Verfahren, wie z.B. beschrieben in Kunststoffhandbuch, Bd.3/4, Technische Thermoplaste, Hanser Fachbuch, Seiten 413 - 430. Dabei wird die Mischung vorzugsweise direkt in der Giessform polymerisiert.

Die jeweilige Polymerisation erfolgt vorzugsweise unter Ausschluß von Luftfeuchtigkeit oder auch im Vakuum oder in inerter Atmosphäre.

In einer weiteren bevorzugten Ausführungsform der Erfindung wird zu den erstarrten Lactamschmelzen a) und b) und/oder den erstarrten Lactamschmelzen c) noch weiteres Lactam und/oder weiterer Katalysator und/oder Aktivator und/oder gegebenenfalls weitere Additive, wie Schlagzähmodifikatoren, bevorzugt Polyetheramin-Copolymere, Glasfasern, Endlosglasfasern, Kohlefasern, Aramidfasern und/oder Verarbeitungshilfsmittel, bevorzugt hochmolekulare Polyole, Verdicker, bevorzugt Aerosile, UV- und Thermostabilisatoren, Leitfähigkeitsverbesserer, bevorzugt Ruße und Graphite, ionische Flüssigkeiten, Markierungsstoffe und/oder Farben, zugegeben.

Die erstarrten Lactamschmelzen a) und b) sind in Abhängigkeit von der späteren Verwendung in beliebigen Mengenverhältnissen einsetzbar. Bevorzugt sind Mengenverhältnisse von a) zu b) von 1:3 bis 3:1, besonders bevorzugt Mengenverhältnisse von 1:1.

Dabei ist ein Verhältnis von Aktivator zum Katalysator in der erfindungsgemäßen Zusammensetzung von 1:2 bevorzugt. Dieses Verhältnis kann auch durch a) und b) alleine, a) und b) in Kombination mit c), durch a) und c), sowie b) und c) mit nachdosiertem Aktivator und/oder Katalysator eingestellt werden. In einer weiteren bevorzugten Ausführungsform der Erfindung enthält die Zusammensetzung mindestens eine weitere Komponente, ausgewählt aus Füll- und/oder Verstärkungsstoffen, zusätzlichen Polymeren, die von den Uretdionen verschieden sind und/oder weiteren Zusatzstoffen, die sich chemisch von dem einzusetzendem Katalysator und Aktivator unterscheiden.

Vorzugsweise erfolgt die Zugabe dieser zusätzlichen Komponenten in die erstarrte Lactamschmelze a) zusammen mit dem polymeren Carbodiimid und/oder dem Uretdion.

Ebenfalls bevorzugt ist die Zugabe dieser zusätzlichen Komponenten in die erstarrte Lactamschmelze b) zusammen mit dem Katalysator.

In einer weiteren Ausführungsform der Erfindung erfolgt die Zugabe dieser zusätzlichen Komponenten in die erstarrte Lactamschmelze c) zusammen mit dem polymeren Carbodiimid und/oder dem Uretdion und dem Katalysator.

Füll- und/oder Verstärkungsstoff im Sinne der Erfindung sind organische oder anorganische Füll- und/oder Verstärkungsstoffe. Bevorzugt sind anorganische Füllstoffe, insbesondere Kaolin, Kreide, Wollastonit, Talkum, Calciumcarbonat, Silikate, Titandioxid, Zinkoxid, Graphit, Graphene, Glaspartikel (z.B. Glaskugeln), nanoskalige Füllstoffe, (wie Kohlenstoff-Nanoröhren carbonanotubes), carbon black, Schichtsilikate, nanoskalige Schichtsilikate, nanoskaliges Aluminiumoxid (Al₂O₃), nanoskaliges Titandioxid (TiO₂) und/oder nanoskaliges Siliciumdioxid (SiO₂).

Besonders bevorzugt kommen ein oder mehrere Faserstoffe zum Einsatz, ausgewählt aus bekannten anorganischen Verstärkungsfasern, insbesondere Borfasern, Glasfasern, Holzfasern, Kohlenstofffasern, Kieselsäurefasern, Keramikfasern und Basaltfasern; organischen Verstärkungsfasern, insbesondere Aramidfasern, Polyesterfasern, Nylonfasern/Polyamidfasern, Polyethylenfasern; und Naturfasern, insbesondere Holzfasern, Flachsfasern, Hanffasern und Sisalfasern. Insbesondere bevorzugt ist der Einsatz von Glasfasern, insbesondere Schnittglasfasern, Kohlenstofffasern, Aramidfasern, Borfasern, Metallfasern und/oder Kaliumtitanatfasern.

Insbesondere können auch Mischungen der genannten Füll- und/oder Verstärkungsstoffe eingesetzt werden. Besonders bevorzugt werden als Füll- und/oder Verstärkungsstoffe Glasfasern und/oder Glaspartikel, insbesondere Glaskugeln, ausgewählt.

Die Menge an einzusetzenden Füll- und/oder Verstärkungsstoffen beträgt vorzugsweise 30 bis 90 Gew.-%, insbesondere 30 bis 80 Gew.-%, bevorzugt 30 bis 50 Gew.-%, weiterhin bevorzugt von 50 bis 90 Gew.-%.

Die zusätzlich eingesetzten Polymere im Sinne der Erfindung sind: Polystyrol, Styrol-Copolymersiate, insbesondere Styrol-Acrylnitril-Copolymere (SAN), Acrylnitril-Butadien-StyrolCopolymere (ABS) oder Styrol-Butadien-Copolymere (SB), Polyphenylenoxidether, Polyolefine, insbesondere Polyethylen (HDPE (high-density-polyethylene), LDPE (low-density-polyethylene), Polypropylen oder Polybuten-1, Polytetrafluorethylen, Polyester, insbesondere Polyethylenterephthalat (PET); Polyamide, Polyether, insbesondere Polyethylenglykol (PEG), Polypropylenglykol oder Polyethersulfone (PESU oder PES); Polymere aus Vinylgruppen enthaltenden Monomeren, insbesondere Polyvinylchlorid, Polyvinylidenchloride, Polystryrol, schlagzäh-modifiziertes Polystyrol, Polyvinylcarbazol, Polyvinylacetat, Polyisobutylene, Polybutadien und/oder Polysulfone. Es ist weiterhin die Verwendung von Copolymeren als Polymer möglich, die aus den Monomereinheiten der oben genannten Polymere bestehen.

In einer weiteren Ausführungsform der Erfindung kann das einzusetzende Polymer Gruppen enthalten, die zur Bildung von Block- und/oder Pfropf-Copolymeren mit dem aus den Monomeren gebildeten Polymeren geeignet sind. Beispiele für solche Gruppen sind Epoxy-, Amin-, Carboxyl-Anhydrid-, Oxazolin-, Carbodiimid-, Urethan-, Isocyanat- und Lactam-Gruppen. Polymere mit Carbodiimid-Gruppen werden dann eingesetzt, wenn kein Carbodiimid als Aktivator eingesetzt wird.

Optional enthaltenes Polymer ist vorzugsweise in einer Menge von 0 bis 40 Gew.-%, bevorzugt von 0 bis 20 Gew.-%, besonders bevorzugt in einer Menge von 0 bis 10 Gew.-% enthalten.

In einer bevorzugten Ausführungsform enthält die erfindungsgemäße Zusammensetzung weitere Zusatzstoffe. Bevorzugt werden die Zusatzstoffe in einer Menge von 0 bis 5 Gew.-%, besonders bevorzugt von 0 bis 4 Gew.-%, ganz besonders bevorzugt von 0 bis 3,5 Gew.-% eingesetzt. Als Zusatzstoffe können bevorzugt Stabilisatoren, insbesondere Kupfersalze, Farbstoffe, Antistatika, Füllöle, Stabilisatoren, Oberflächenverbesserer, Sikkative, Entformungs-Hilfsmittel, Trennmittel, Antioxidantien, Lichtstabilisatoren, Stabilisatoren, Gleitmittel, Polyole, Flammschutzmittel, Treibmittel, Schlagzähmodifikatoren und/oder Nukleierungshilfsmittel zugesetzt werden.

Als Schlagzähmodifikatoren sind insbesondere Polydien-Polymere, vorzugsweise Polybutadien, Polyisopren, enthaltend Anhydrid und/oder Epoxygruppen geeignet. Das Polydien-Polymer weist insbesondere eine Glasübergangstemperatur unter 0°C, bevorzugt unter -10°C, besonders bevorzugt unter -20 °C auf. Das Polydien-Polymer kann auf der Basis eines Polydien-Copolymers mit Polyacrylaten, Polyethylenacrylaten und/oder Polysiloxanen basieren und mittels der gängigen Verfahren hergestellt werden, vorzugsweise durch Emulsionspolymerisation, Suspensionspolymerisation, Lösungspolymerisation, Gasphasenpolymerisation.

In einer weitern bevorzugten Ausführungsform der Erfindung wird als Zusatzstoff Polyol eingesetzt, um die Schlagzähigkeit zu verbessern, z.B. erhältlich von der Rhein Chemie Rheinau GmbH unter der Bezeichnung Addonyl® 8073. Ebenfalls einsetzbar sind Polyol-triamine geeignet, um die Tieftemperatur-Schlagzähigkeit zu verbessern. Ein geeignetes Produkt ist Addonyl® 8112. Vorzugsweise werden die Polyole im Konzentrationsbereich 1 - 20 Gew.-% eingesetzt.

Die optionale Zugabe von Füll- und/oder Verstärkungsstoffen und weiteren Zusatzstoffen kann vor oder zusammen mit der Zugabe von Katalysator und/oder Aktivator erfolgen.

Die Herstellung der erfindungsgemäßen erstarrten Schmelzen a), b) und/oder c) erfolgt vorzugsweise wie folgt:

### - Herstellung der erstarrten Lactamschmelze a):

Hierfür werden 0,1 - 5 Gew.% mindestens eines polymeren Carbodiimids, vorzugsweise mindestens eines polymeren aromatischen Carbodiimids und/oder mindestens eines Uretdions, zu einer Lactamschmelze bei Temperaturen zwischen 70 und 120 °C, bevorzugt 80 - 100 °C gegeben, homogenisiert und anschließend vorzugsweise innerhalb einer Zeitspanne von fünf Minuten, besonders bevorzugt innerhalb einer Zeitspanne von einer Minute auf eine Temperatur unterhalb von 40°Cabgekühlt, vorzugsweise auf einem gekühlten Pastillierband pastilliert bzw. auf einer Schuppenwalze abgeschuppt.

### - Herstellung der erstarrten Lactamschmelze b):

Hierfür werden 0,2 - 5 Gew.% mindestens eines der vorgenannten Katalysatoren, bevorzugt Na-Caprolactamat oder ein Na-Caprolactamat-Masterbatch, zu einer Lactamschmelze bei Temperaturen zwischen 70 und 120°C, bevorzugt 80 - 100°C, gegeben, homogenisiert und vorzugsweise anschließend innerhalb einer Zeitspanne von fünf Minuten, besonders bevorzugt innerhalb einer Zeitspanne von einer Minute auf eine Temperatur unterhalb von 40°C abgekühlt vorzugsweise auf einem gekühlten Pastillierband pastilliert bzw. auf einer Schuppenwalze abgeschuppt.

### - Herstellung der erstarrten Lactamschmelze c):

Hierfür werden 0,1 - 5 Gew.% mindestens eines polymeren Carbodiimids, vorzugsweise mindestens eines polymeren aromatischen Carbodiimids und/oder mindestens eines Uretdion zu einer Lactamschmelze bei Temperaturen zwischen 70 und 120 °C, bevorzugt bei 80 - 100 °C gegeben und separat 0,2 - 5 Gew.% mindestens eines der vorgenannten Katalysatoren, vorzugsweise Na-Caprolactamat oder ein Na-Caprolactamat-Masterbatch, zu einer Lactamschmelze bei Temperaturen zwischen 70 und 120 °C, bevorzugt bei 80 - 100 °C gegeben, separat in beheizten Kesseln homogenisiert, über einen Mischer bei Temperaturen von 70 bis 120°C, bevorzugt 80 - 100 °C in weniger als 30 Minuten, bevorzugt in weniger als 10 Minuten, besonders bevorzugt in weniger als einer Minute, miteinander vermischt, anschließend innerhalb einer Zeitspanne von fünf Minuten, besonders bevorzugt innerhalb einer Zeitspanne von einer Minute auf eine Temperatur unterhalb von 40°C abgekühlt, vorzugsweise auf einem gekühlten und Pastillierband pastilliert bzw. auf einer Schuppenwalze ggf. unter inerter Atmosphäre, wie z. B. Stickstoff, abgeschuppt.

Die erstarrten Lactamschmelzen a), b) und c) werden von Sauerstoff und Feuchtigkeit geschützt gelagert, bevorzugt bei Temperaturen zwischen 4 und 30°C, besonders bevorzugt bei Temperaturen unterhalb von 10°C.

Die erstarrten Lactamschmelzen a), b) und c) zeichnen sich durch eine Lagerfähigkeit von mehreren Wochen aus, so dass es möglich ist, die Mischungen zum Einsatzort zu transportieren und vor ihrem Einsatz zu lagern.

Damit ist es möglich, die Mischung exakt für den Einsatz zuzubereiten und so Schwankungen in der Zusammensetzung, wie sie bei unmittelbar vor der Polymerisation hergestellten Mischungen entstehen, zu vermeiden.

In einer bevorzugten Ausführungsform der Erfindung entsprechen die polymeren Carbodiimide den Verbindungen der Formel (II)

R¹-(-N=C=N-R²-)ₘ-R³ (II),

in der
m einer ganzen Zahl von 2 bis 500 entspricht,
R¹ = R-NCO, R-NHCONHR⁴, R-NHCONR⁴R⁵ oder R-NHCOOR⁶ und
R² = Arylen und/oder C₇-C₁₈- Aralkylen
R³ = -NCO, -NHCONHR⁴, -NHCONR⁴R⁵ oder -NHCOOR⁶ ist,
wobei in R¹ unabhängig voneinander R⁴ und R⁵ gleich oder verschieden sind und einen C₁-C₆-Alkyl-, C₆-C₁₀-Cycloalkyl- oder C₇-C₁₈-Aralkylrest darstellen und R⁶ eine der Bedeutungen von R¹ hat und R⁴= H oder C₁-C₄-Alkyl.

In den Fällen, in denen die erfindungsgemäße Zusammensetzung eine Zweiermischung aus a) und b) bzw. a) und c), bzw. b) und c) sowie die Mischung aus a), b) und c) umfasst, werden die notwendigen Bestandteile der Zweier- bzw. Dreiermischung in gängigen Mischapparaturen verrührt.

Zum Mischen können dabei standardmäßige Mischapparaturen, horizontale oder vertikale Mischer, bevorzugt Paddelmischer, Bandmischer, Pflugscharmischer, Ringschichtmischer oder Mischer-Granulatoren eingesetzt werden, die kommerziell erhältlich sind, z.B. bei der Firma Lödige Process Technology.

Auch hier ist es bevorzugt, dass die polymeren Carbodiimide den Verbindungen der Formel (II) entsprechen. Es wird auf die diesbezüglichen Ausführungen verwiesen.

Der Gegenstand der vorliegenden Erfindung umfaßt auch Zusammensetzung erstarrter Lactamschmelzen mit 0,2 - 5 Gew.-% Katalysator ausgewählt aus der Gruppe: Lactam-Magnesium-Halogenid, Alkali-Alumo-Dilactamat, Alkali- und/oder Erdalkalilactamat und 0,1 - 5 Gew.% Carbodiimid und/oder Uretdion, erhältlich durch Mischen von
a. mindestens einer Schmelze aus Caprolactam und 0,1 - 5 Gew.-% mindestens eines polymeren Carbodiimids, vorzugsweise mindestens eines polymeren aromatischen Carbodiimids, und/oder mindestens einem Uretdions und
b. mindestens einer Schmelze aus Caprolactam und 0,2 - 5 Gew.-% mindestens eines Katalysators, ausgewählt aus der Gruppe: Lactam-Magnesium-Halogenid, Alkali-Alumo-Dilactamat, Alkali- und/oder Erdalkalilactamat
bei Temperaturen 70 - 120°C über einen Zeitraum 1- 60 Sekunden und anschließender Konfektionierung, bevorzugt Pastillierung, Pulverisierung, Abschuppung oder Granulierung, unter Kühlung. Die Konfektionierung kann dabei auch unter Inertgas erfolgen.

Auch hier ist es bevorzugt, dass die polymeren Carbodiimide den Verbindungen der Formel (II) entsprechen. Es wird auf die diesbezüglichen Ausführungen verwiesen.

Der Gegenstand der vorliegenden Erfindung umfaßt auch ein Verfahren zur Herstellung von Gusspolyamiden durch Polymerisation einer oder mehrerer Bestandteile der erfindungsgemäßen Zusammensetzung in der Gussform bei Temperaturen zwischen 80 und 200°C, vorzugsweise 80 und 190°C, besonders bevorzugt 80 bis 160 °C, insbesondere bevorzugt 100 bis 160 °C, bevorzugt unter vermindertem Druck, bevorzugt < 1 bar, oder inerter Atmosphäre, besonders bevorzugt unter Stickstoff.

Die Polymerisation erfolgt dabei vorzugsweise gemäß den in Kunststoffhandbuch, Bd.3/4, Technische Thermoplaste, Hanser Fachbuch, Seiten 413 - 430 beschriebenen Verfahren.

In einer weiteren Ausführung der vorliegenden Erfindung kann die Polymerisation nach einem geeigneten Formgebungsverfahren, vorzugsweise Spritzguss-, wie Reaction Injection Moulding (RIM), Standgussverfahren oder Rotationsguss-Verfahren, durchgeführt werden. Besonders bevorzugt kann die Polymerisation nach dem Spritzgussverfahren erfolgen.

Die vorgenannten erfindungsgemäßen Zusammensetzungen werden vorzugsweise zur Herstellung von Kunststoff-Erzeugnissen verwendet als Ersatz für Metall, bevorzugt in der Automobilindustrie, bei der Produktion von elektrotechnischen Teilen, für die Herstellung von Platten, Stäben, Rohren, Seilscheiben, Seilrollen, Zahnrädern und Lagern und/oder für die Behälterfertigung eingesetzt. Dabei ist auch die Herstellung von gewebehaltigen Kunststoffen möglich. Als Gewebe sind dabei sind vozugsweise Glasfasergewebe, Basaltgewebe, Kohlefaser, Hybridgewebe aus Glasfaser und Kohlefaser und/oder Aramidgewebe einsetzbar.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele:

### Reagenzien:

(A) Caprolactam trocken (Erweichungspunkt > 69 °C) von der Firma Lanxess Deutschland GmbH;
(B) Addonyl® Kat NL von der Rhein Chemie Rheinau GmbH, ca. 18 % Natriumcaprolactamat in Caprolactam;
   Als Aktivatoren:
(C) Addonyl® 8108: aliphatische Polyisocyanatlösung, kommerziell erhältlich bei der Rhein Chemie Rheinau GmbH;
(D) Desmodur® H: Hexamethylendiisocyanat, kommerziell erhältlich bei der Bayer MaterialScience AG,
(E) Stabaxol® P: aromatisches polymeres Carbodiimid, kommerziell erhältlich bei der Rhein Chemie Rheinau GmbH;
(F) Stabaxol® I: aromatisches monomeres Carbodiimid, kommerziell erhältlich bei der Rhein Chemie Rheinau GmbH;
(G) Addolink® TT: dimeres TDI-Uretdion, kommerziell erhältlich bei der Rhein Chemie Rheinau GmbH;
(H) Addonyl ®TT: dimeres TDI-Uretdion, kommerziell erhältlich bei der Rhein Chemie Rheinau GmbH;

### Durchführung und Messung:

### Herstellung der Zweikomponenten-Mischung aus a) und b) (2 K-Pulvermischung)

Caprolactam wurde bei 75 °C geschmolzen und 20 min unter Vakuum getrocknet. Danach wurde unter Rühren der jeweilige Aktivator (ersichtlich aus Tabelle 1) zugegeben, homogenisiert und in eine mit Stickstoff überlagerte Aluminiumform gegossen. Nach Erstarren der Schmelze wurde diese zerkleinert und in eine mit Stickstoff überlagerte Probeflasche überführt und gelagert.

In analoger Weise wurde Caprolactam bei 75 °C geschmolzen und 20 min unter Vakuum getrocknet. Danach wurde unter Rühren Addonyl® Kat NL zugegeben, homogenisiert und in eine mit Stickstoff überlagerte Aluminiumform gegossen, Nach Erstarren der Schmelze wurde diese pulverisiert und in eine mit Stickstoff überlagerte Probeflasche überführt und gelagert.

Nach 30 Tagen wurden die entsprechenden Pulver, enthaltend Aktivator bzw. Katalysator, im Massenverhältnis 1:1 gemischt und in eine Probeflasche überführt, die dann direkt für die unten beschriebenen Polymerisationsversuche eingesetzt wurde.

### Herstellung der Einkomponenten-Mischung c) (1 K-Mischungen)

Caprolactam wurde bei 75 °C geschmolzen und 20 min unter Vakuum getrocknet. Danach wurde unter Rühren der jeweilige Aktivator (ersichtlich aus Tabelle 1) zugegeben und homogenisiert. In analoger Weise wurde Caprolactam bei 75 °C geschmolzen und 20 min unter Vakuum getrocknet. Danach wurde unter Rühren Addonyl® Kat NL zugegeben und homogenisiert. Die so erhaltenden Katalysator- und Aktivator-Schmelzen wurden dann vereint und bei 75 °C für wenige Minuten homogenisiert. Der Inhalt wurde dann in eine mit Stickstoff überlagerte Aluminiumform gegossen. Nach Erstarren der Schmelze wurde diese pulverisiert und in eine mit Stickstoff überlagerte Probeflasche überführt und gelagert. Nach 30 Tagen wurde das Pulver, enthaltend Aktivator und Katalysator, in eine Probeflasche überführt und für die unten beschriebenen Polymerisationsversuche eingesetzt.

### Polymerisationsversuche

Die Probeflaschen wurden in einen Trockenschrank bei 160°C gestellt. Nach ca. 30 min wurde die Probe entnommen. Die Ergebnisse sind in Tabelle 2 zusammengefasst.

**Tabelle 1: Rezepturen**

| **Versuchsnummer** | **Art der Mischung** | **(A) [g]** | **(B) [g]** | **(C) [g]** | **(D) [g]** | **(E) [g]** | **(F) [g]** | **(G) [g]** |
|---|---|---|---|---|---|---|---|---|
| 1 | 2 K-Pulvermischung | 388,8 | 8,0 | 3,2 | | | | |
| 2 | 2 K-Pulvermischung | 388,8 | 8,0 | | 1,0 | | | |
| 3 | 2 K-Pulvermischung | 388,8 | 8,0 | | | 3,2 | | |
| 4 | 2 K-Pulvermischung | 388,8 | 8,0 | | | | 3,2 | |
| 5 | 2 K-Pulvermischung | 388,8 | 8,0 | | | | | 3,2 |
| 6 | 2 K-Pulvermischung | 388,8 | 16,0 | | | | | 3,2 |
| 7 | 2 K-Pulvermischung | 377,6 | 16,0 | | | | | 6,4 |
| 8 | 1 K-Mischung | 388,8 | 8,0 | 3,2 | | | | |
| 9 | 1 K-Mischung | 388,8 | 8,0 | | | | | 3,2 |
| 10 | 1 K-Mischung | 388,8 | 8,0 | | | 3,2 | | |

**Tabelle 2: Ergebnisse der Gusspolymerisation**

| **Versuch** | **Polymerisation** | **Aussehen** | **Lagerstabilität** |
|---|---|---|---|
| 1 (Vergleich) | Keine oder unvollständige Reaktion | inhomogen | - |
| 2 (Vergleich) | Keine oder unvollständige Reaktion | inhomogen | - |
| 3 (Erfindungsgemäß) | Vollständige Reaktion | homogen | > 30 Tage |
| 4 (Vergleich) | Keine Reaktion | - | - |
| 5 (Erfindungsgemäß) | Vollständige Reaktion | homogen | > 30 Tage |
| 6 (Erfindungsgemäß) | Vollständige Reaktion | homogen | > 30 Tage |
| 7 (Erfindungsgemäß) | Vollständige Reaktion | homogen | > 30 Tage |
| 8 (Vergleich) | Keine/unvollständige Reaktion | inhomogen | - |
| 9 (Erfindungsgemäß) | Vollständige Reaktion | homogen | > 30 Tage |
| 10 (Erfindungsgemäß) | Vollständige Reaktion | homogen | > 30 Tage |

Der Restmonomerengehalt der erfindungsgemäßen Gußpolyamide betrug weniger als 1 Gew.-%.

Durch das gezielte und präzise Einstellen und Auswählen der benötigten Aktivator- und Katalysatoranteile ist es daher möglich, lagerstabile Zusammensetzungen bereitzustellen, die einen Einsatz zur Herstellung von Guß-Polyamid-Teilen mit sehr geringem apparativem Aufwand ermöglichte.

### Beispiele zur Herstellung von Guss-PA6 Kunststoff-Formkörpern und von Guss-PA6 Kunststoff-Verbundformkörpern aus der erfindungsgemäßen Zusammensetzung:

### Beispiel 11:

### Herstellung der Zweikomponenten-Mischung aus a) und b) (2 K-Pulvermischung)

*193.6 g* Caprolactam wurden bei 75 °C geschmolzen. Danach wurde unter Rühren 6.4g Addonyl ®TT der Rhein Chemie Rheinau zugeben, homogenisiert, 5 min unter Vakuum nachgetrocknet, und die Schmelze in eine mit Stickstoff überlagerte 21 °C kalte Aluminiumform gegossen. Nach Erstarren der Schmelze wurde diese zerkleinert und in eine mit Stickstoff überlagerte Probeflasche überführt und bei 6°C im Kühlschrank für eine Woche gelagert.

In analoger Weise wurden 184g Caprolactam bei 75 °C geschmolzen. Danach wurde unter Rühren 16g Addonyl® Kat NL zugegeben, homogenisiert, und 5 min unter Vakuum nachgetrocknet und in eine mit Stickstoff überlagerte kalte Aluminiumform mit einer Temperatur von 21°C gegossen. Nach Erstarren der Schmelze wurde diese pulverisiert und in eine mit Stickstoff überlagerte Probeflasche überführt. Die entsprechenden und bei 6°C im Kühlschrank für eine Woche gelagert.

Diese Pulver, enthaltend Aktivator bzw. Katalysator, wurden dem Kühlschrank entnommen, gemischt und in einen mit Stickstoff überlagerten Vorlagebehälter/Dreihalskolben gegeben und dann bei einer Temperatur von 90°C aufgeschmolzen und bei dieser Temperatur für die im folgenden beschriebenen Versuche gelagert.

Alle 10 Minuten wurde mit einer Plastik-Pipette eine 2 ml Probe entnommen und in ein mit Hilfe eines Ölbades auf 170°C temperiertes Reagenzglas mit 5 mm Innendurchmesser überführt.

Über einen Zeitraum von 30 Minuten konnte die Schmelze durch die Temperaturerhöhung auspolymerisiert werden. Die Probenkörper waren visuell homogen.

### Beispiel 12:

Wie in Beispiel 11 wurden in einem Dreihalskolben etwa 400g der aktivierten Caprolactamschmelze unter Stickstoff angesetzt.

Eine Stahlform mit einer Kavität in der Dimension 20 x 30 x 0.2 cm bestand aus zwei Hälften und wurde mit Hilfe von Silikondichtungen abgedichtet. In die Kavität wurden vor dem Versuch zwei Lagen vorgetrocknetes Glasfasergewebe (der Firma PPG), etwa 600m² Flächengewicht, 2-2 Köperbindung) eingelegt und mechanisch fixiert. Die Köperbindung (auch kurz Köper oder Twill) ist - neben der Leinwand- und der Atlasbindung - eine der drei Grundbindungsarten für gewebte Stoffe.

Die Stahlform besaß zwei Bohrungen, über die die aktivierte Caprolactamschmelze aus Beispiel 11 in die Kavität einfließen konnte; über die zweite Bohrung konnte, nach vollständigem Füllen, die überschüssige Schmelze wieder austreten.

Die Stahlform wurde auf 170°C erwärmt, und mit Hilfe einer Vakuumpumpe, die an eine der Bohrungen der Stahlform angeschlossen war, die aktivierte Caprolactamschmelze aus Beispiel 11 in die Form gesaugt, wo sie das Gewebe tränkte und dann auspolymerisierte.

Nach 30 Minuten wurde die Form geöffnet und eine auspolymerisierte Verbundkunststoffplatte entnommen.

Die Verbundkunststoffplatte war vollständig durchpolymerisiert; der über eine Methanol-Extraktion bestimmte Restmonomergehalt lag unter 1 Gew.-%.

### Beispiel 13:

### Herstellung einer Einkomponentenmischung (1K-Pulvermischung)

*193.6 g* Caprolactam wurden bei 75 °C geschmolzen. Danach wurden unter Rühren 6.4g Addonyl®TT der Rhein Chemie Rheinau zugeben, homogenisiert und noch 5 min unter Vakuum (< 0.1 mbar) nachgetrocknet.

Gleichzeitig wurden in einem zweiten Ansatz 184g Caprolactam bei 75 °C geschmolzen und im Anschluss unter Rühren 16g Addonyl® Kat NL zugegeben, für 5 min homogenisiert und 5 min unter Vakuum (< 0.1 mbar) nachgetrocknet.

Die beiden Schmelzen wurden vereinigt, indem die Aktivator-haltige Schmelze zu der Katalysatorhaltigen Schmelze zugegeben wurde und die vereinigten Schmelzen noch für 30 Sekunden gerührt wurden.

Danach wurde die Schmelzemischung in eine mit Stickstoff überlagerte Aluminiumform mit einer Temperatur von 21°C gegossen. Nach Erstarren der Schmelze wurde diese pulverisiert und in eine mit Stickstoff überlagerte Probeflasche überführt und bei 6°C im Kühlschrank für eine Woche gelagert.

Dieses Pulver, enthaltend sowohl Aktivator als auch Katalysator, wurden dem Kühlschrank entnommen und in einen mit Stickstoff überlagerten Dreihalskolben gegeben, dort bei einer Temperatur von 90°C aufgeschmolzen und bei dieser Temperatur die Schmelzemischung bevorratet.

Alle 10 Minuten wurde mit einer Plastik-Pipette eine 2 ml Probe entnommen und in ein mit Hilfe eines Ölbades auf 170°C temperiertes Reagenzglas mit 5 mm Innendurchmesser überführt.

Über einen Zeitraum von 30 Minuten konnte die Schmelze durch die Temperaturerhöhung auspolymerisiert werden. Die Probenkörper waren visuell homogen.

### Beispiel 14:

### Herstellung der Zweikomponenten-Mischung aus a) und b) (2 K-Pulvermischung), wobei die Pulver a) und b) nach der Herstellung vereinigt werden und diese Pulvermischung dann bei Temperaturen unterhalb von 10°C gelagert wurde.

*193.6 g* Caprolactam wurden bei 75 °C geschmolzen. Danach wurden unter Rühren 6.4g Addonyl®TT der Rhein Chemie Rheinau zugeben, homogenisiert, 5 min unter Vakuum (< 0.1 mbar) nachgetrocknet, und die Schmelze in eine mit Stickstoff überlagerte Aluminiumform mit einer Temperatur von 21°C gegossen. Nach Erstarren der Schmelze wurde diese zerkleinert.

In analoger Weise wurden 184g Caprolactam bei 75°C geschmolzen. Dannach wurden unter Rühren 16g Addonyl® Kat NL zugegeben, homogenisiert, und 5 min unter Vakuum (< 0.1 mbar) nachgetrocknet und in eine mit Stickstoff überlagerte Aluminiumform mit einer Temperatur von 21°C gegossen. Nach Erstarren der Schmelze wurde diese ebenfalls in Schuppen zerkleinert.

Beide Pulver wurden im Massenverhältnis 1:1 gemischt und in Form von Schuppen in eine mit Stickstoff überlagerte Probeflasche überführt und bei 6°C im Kühlschrank für eine Woche gelagert.

Diese Schuppen wurde dem Kühlschrank entnommen und in einen mit Stickstoff überlagerten Dreihalskolben gegeben, dann bei einer Temperatur von 90°C aufgeschmolzen und die erhaltene Schmelze für die Herstellung eines Verbundkunststoffes wie in Beispiel 12 beschrieben eingesetzt. Auch in diesem Fall konnte eine Verbundkunststoffplatte hergestellt werden, die einen Restmonomergehalt von etwa 1 Gew.-% aufwies.

## Patentansprüche

1. Zusammensetzung, enthaltend
mindestens eine der folgenden Kombinationen
aus a), b) und c)
a) und b),
b) und c),
a) und c) sowie
c) alleine, wobei
a) für erstarrte Lactamschmelzen mit 0,1 - 5 Gew.-% mindestens eines polymeren Carbodiimids, vorzugsweise mindestens eines polymeren aromatischen Carbodiimids, und/oder mindestens einem Uretdions,
b) für erstarrte Lactamschmelzen mit 0,2 - 5 Gew.-% Katalysator, ausgewählt aus der Gruppe: Lactam-Magnesium-Halogenid, Alkali-Alumo-Dilactamat, Alkali- und/oder Erdalkalilactamat
und
c) für erstarrte Lactamschmelzen mit 0,2 - 5 Gew.-% Katalysator ausgewählt aus der Gruppe: Lactam-Magnesium-Halogenid, Alkali-Alumo-Dilactamat, Alkali- und/oder Erdalkalilactamat und 0,1 - 5 Gew.-% mindestens eines polymeren Carbodiimids, vorzugsweise mindestens eines polymeren aromatischen Carbodiimids, und/oder mindestens eines Uretdions gegebenenfalls in Kombination mit weiterer erstarrter Lactamschmelze b) steht.

2. Zusammensetzung nach Anspruch 1, **dadurch gekennzeichnet, dass** für die Lactamschmelze Verbindungen der Formel (I) 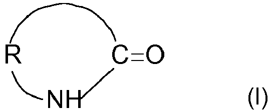 eingesetzt werden, wobei R einer Alkylengruppe mit 3 bis 13 Kohlenstoffatomen entspricht.

3. Zusammensetzung nach Anspruch 1 oder 2, **dadurch gekennzeichnet, dass** das Uretdion ausgehend von folgenden monomeren Verbindungen, ausgewählt aus der Gruppe Isophorondiisocyanat, 1,4-Cyclohexyldiisocyanat, 1,1-Methylen-bis-(4-isocyanatocyclohexan), 1,2-Bis-(4-isocyanatononyl)-3-heptyl-4-pentyl-cyclohexan und Hexa-methylen-1,6-diisocyanat, hergestellt wird.

4. Zusammensetzung nach einem oder mehreren der Ansprüche 1 bis 3, **dadurch gekennzeichnet, dass** es sich bei dem Uretdion um Verbindungen handelt, die ausgehend von einem aromatischen Isocyanat ausgewählt aus der Gruppe, bestehend aus 2,4-Diisocyanatotoluol, 2,6-Diisocyanatotoluol, 1,5-Naphthylendiisocyanat, 4,4'-Methylen-diphenyldiisocyanat, 1,3-Bis-(3-isocyanato-4-methylphenyl)-2,4-dioxo-diazetidin, N,N'-Bis-(4-methyl-3-isocyanatophenyl)-Harnstoff und Tetramethylxylylen-diisocyanat, erhalten werden.

5. Zusammensetzung nach einem oder mehreren der Ansprüche 1 bis 4, **dadurch gekennzeichnet, dass** es sich bei dem polymeren Carbodiimid um mindestens eine Verbindung der Formel (II)
R¹-(-N=C=N-R²-)ₘ-R³ (II) handelt,
in der
m einer ganzen Zahl von 2 bis 500 entspricht,
R¹ = R²-NCO, R²-NHCONHR⁴, R²-NHCONR⁴R⁵ oder R²-NHCOOR⁶,
R² = C₁ - C₁₈-Alkylen, C₅-C₁₈-Cycloalkylen-, Arylen und/oder C₇-C₁₈- Aralkylen, vorzugsweise Arylen und/oder C₇-C₁₈- Aralkylen
und
R³ = -NCO, -NHCONHR⁴, -NHCONR⁴R⁵ oder -NHCOOR⁶ ist,
wobei in R¹ unabhängig voneinander R⁴ und R⁵ gleich oder verschieden sind und einen C₁-C₆-Alkyl-, C₆-C₁₀-Cycloalkyl- oder C₇-C₁₈-Aralkylrest darstellen und R⁶ eine der Bedeutungen von R¹ hat oder für einen Polyester- oder einen Polyamidrest oder -(CH₂)ₕ-O-[(CH₂)ₖ-O]_{g} -R⁴ steht,
mit l = 1-3, k= 1-3, g = 0-12 und
R⁴= H oder C₁-C₄-Alkyl.

6. Zusammensetzung nach einem oder mehreren der Ansprüche 1 bis 5, **dadurch gekennzeichnet, dass** es sich bei den erstarrten Lacatamschmelzen mit 0,1 - 5 Gew.-% mindestens eines polymeren Carbodiimids, vorzugsweise mindestens eines polymeren aromatischen Carbodiimids, und/oder mindestens eines Uretdions und/oder mit 0,2 - 5 Gew.-% Katalysator, ausgewählt aus der Gruppe: Lactam-Magnesium-Halogenid, Alkali-Alumo-Dilactamat, Alkali- und/oder Erdalkalilactamat, bezogen auf die Lactamschmelze, um Pulver, Pastillen, Granulate und/oder Schuppen handelt.

7. Erstarrte Lactamschmelze mit 0,2 - 5 Gew.-% Katalysator ausgewählt aus der Gruppe: Lactam-Magnesium-Halogenid, Alkali-Alumo-Dilactamat, Alkali- und/oder Erdalkalilactamat und 0,1 - 5 Gew.-% Carbodiimid und/oder Uretdion, erhältlich durch Mischen von
a. mindestens einer Schmelze aus Caprolactam und 0,1 - 5 Gew.-% mindestens eines polymeren Carbodiimids, vorzugsweise mindestens eines polymeren aromatischen Carbodiimids, und/oder mindestens eines Uretdions und
b. mindestens einer Schmelze aus Caprolactam und 0,2 - 5 Gew.-% mindestens eines Katalysators, ausgewählt aus der Gruppe: Lactam-Magnesium-Halogenid, Alkali-Alumo-Dilactamat, Alkali- und/oder Erdalkalilactamat
bei Temperaturen 70 - 120 °C über einen Zeitraum 1 - 60 Sekunden und anschließender Konfektionierung unter Kühlung.

8. Verfahren zur Herstellung von Gusspolyamiden durch Polymerisation eines oder mehrerer der Bestandteile aus einem oder mehreren der Ansprüche 1 bis 4 in der Gussform bei Temperaturen von 100 bis 160°C.

## Claims

1. Composition comprising
at least one of the following combinations
of a), b) and c)
a) and b)
b) and c)
a) and c) and also
c) alone, wherein
a) denotes solidified lactam melts having 0.1 - 5% by weight of at least one polymeric carbodiimide, preferably at least one polymeric aromatic carbodiimide, and/or at least one uretdione,
b) denotes solidified lactam melts having 0.2 - 5% by weight of catalyst, selected from the group comprising: lactam magnesium halide, alkali metal aluminodilactamate, alkali metal and/or alkaline earth metal lactamate
and
c) denotes solidified lactam melts having 0.2 - 5% by weight of catalyst selected from the group comprising: lactam magnesium halide, alkali metal aluminodilactamate, alkali metal and/or alkaline earth metal lactamate and 0.1 - 5% by weight of at least one polymeric carbodiimide, preferably at least one polymeric aromatic carbodiimide, and/or at least one uretdione
optionally in combination with further solidified lactam melts b).

2. Composition according to Claim 1, **characterized in that** compounds of the formula (I) are used for the lactam melts 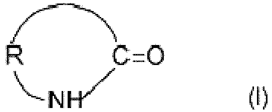 wherein R corresponds to an alkylene group having 3 to 13 carbon atoms.

3. Composition according to Claim 1 or 2, **characterized in that** the uretdione is prepared starting from the following monomeric compounds selected from the group comprising isophorone diisocyanate, 1,4-cyclohexyl diisocyanate, 1,1-methylenebis(4-isocyanatocyclohexane), 1,2-bis(4-isocyanatononyl)-3-heptyl-4-pentylcyclohexane and hexamethylene-1,6-diisocyanate.

4. Composition according to one or more of Claims 1 to 3, **characterized in that** the uretdione are compounds which are obtained starting from an aromatic isocyanate selected from the group consisting of 2,4-diisocyanatotoluene, 2,6-diisocyanatotoluene, 1,5-naphthylene diisocyanate, 4,4'-methylenediphenyl diisocyanate, 1,3-bis(3-isocyanato-4-methylphenyl)-2,4-dioxodiazetidine, N,N'-bis(4-methyl-3-isocyanatophenyl)urea and tetramethylxylylene diisocyanate.

5. Composition according to one or more of Claims 1 to 4, **characterized in that** the polymeric carbodiimide is at least one compound of the formula (II)
R¹-(-N=C=N-R²-)ₘ-R³ (II)
in which
m corresponds to an integer from 2 to 500,
R¹ = R²-NCO, R²-NHCONHR⁴, R²-NHCONR⁴R⁵ or R²-NHCOOR⁶,
R² = C₁ - C₁₈-alkylene, C₅-C₁₈-Cycloalkylene-, arylene and/or C₇-C₁₈-aralkylene, preferably arylene and/or C₇-C₁₈-aralkylene
and
R³ = -NCO, -NHCONHR⁴, -NHCONR⁴R⁵ or -NHCOOR⁶
wherein in R¹, R⁴ and R⁵ are each independently the same or different and represent a C₁-C₆-alkyl, C₆-C₁₀-cycloalkyl or C₇-C₁₈-aralkyl radical and R⁶ has one of the definitions of R¹ or is a polyester or a polyamide radical or -(CH₂)ₕ-O-[(CH₂)ₖ-O]_{g}-R⁴,
where l = 1-3, k = 1-3, g = 0-12 and
R⁴ = H or C₁-C₄-alkyl.

6. Composition according to one or more of Claims 1 to 5, **characterized in that** the solidified lactam melts having 0.1 - 5% by weight of at least one polymeric carbodiimide, preferably at least one polymeric aromatic carbodiimide, and/or at least one uretdione and/or having 0.2 - 5% by weight of catalyst, selected from the group: lactam magnesium halide, alkali metal aluminodilactamate, alkali metal and/or alkaline earth metal lactamate, based on the lactam melts, are in the form of powders, pellets, granules and/or flakes.

7. Solidified lactam melts having 0.2 - 5% by weight of catalyst selected from the group comprising: lactam magnesium halide, alkali metal aluminodilactamate, alkali metal and/or alkaline earth metal lactamate and 0.1 - 5% by weight of carbodiimide and/or uretdione, obtainable by mixing
a) at least one melt of caprolactam and 0.1 - 5% by weight of at least one polymeric carbodiimide, preferably at least one polymeric aromatic carbodiimide, and/or at least one uretdione and
b) at least one melt of caprolactam and 0.2 - 5% by weight of at least one catalyst, selected from the group comprising: lactam magnesium halide, alkali metal aluminodilactamate, alkali metal and/or alkaline earth metal lactamate
at temperatures of 70 - 120°C over a period of 1 - 60 seconds and subsequent finishing under cooling.

8. Process for producing cast polyamides by polymerizing one or more constituents of one or more of Claims 1 to 4 in the casting mould at temperatures of 100 to 160°C.

## Revendications

1. Composition, contenant :
au moins une des combinaisons suivantes
de a), b) et c)
a) et b),
b) et c),
a) et c), et
c) seul,
a) représentant des masses fondues de lactame solidifiées contenant 0,1 à 5 % en poids d'au moins un carbodiimide polymère, de préférence d'au moins un carbodiimide aromatique polymère et/ou d'au moins une uretdione,
b) représentant des masses fondues de lactame solidifiées contenant 0,2 à 5 % en poids d'un catalyseur choisi dans le groupe constitué par : un halogénure de lactame-magnésium, un alumo-dilactamate alcalin, un lactamate alcalin et/ou alcalino-terreux,
et
c) représentant des masses fondues de lactame solidifiées contenant 0,2 à 5 % en poids d'un catalyseur choisi dans le groupe constitué par : un halogénure de lactame-magnésium, un alumo-dilactamate alcalin, un lactamate alcalin et/ou alcalino-terreux, et 0,1 à 5 % en poids d'au moins un carbodiimide polymère, de préférence d'au moins un carbodiimide aromatique polymère et/ou d'au moins une uretdione, éventuellement en combinaison avec d'autres masses fondues de lactame solidifiées b).

2. Composition selon la revendication 1, **caractérisée en ce que** des composés de formule (I) 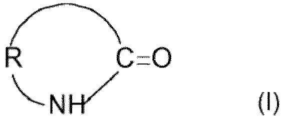 sont utilisés pour les masses fondues de lactame,
dans laquelle R correspond à un groupe alkylène de 3 à 13 atomes de carbone.

3. Composition selon la revendication 1 ou 2, **caractérisée en ce que** l'uretdione est fabriquée à partir des composés monomères suivants, choisis dans le groupe constitué par le diisocyanate d'isophorone, le diisocyanate de 1,4-cyclohexyle, le 1,1-méthylène-bis-(4-isocyanatocyclohexane), le 1,2-bis-(4-isocyanatononyl)-3-heptyl-4-pentyl-cyclohexane et le 1,6-diisocyanate d'hexaméthylène.

4. Composition selon une ou plusieurs des revendications 1 à 3, **caractérisée en ce que** l'uretdione consiste en des composés qui sont obtenus à partir d'un isocyanate aromatique choisi dans le groupe constitué par le 2,4-diisocyanatotoluène, le 2,6-diisocyanatotoluène, le diisocyanate de 1,5-naphtylène, le diisocyanate de 4,4'-méthylène-diphényle, la 1,3-bis-(3-isocyanato-4-méthylphényl)-2,4-dioxo-diazétidine, la N,N'-bis-(4-méthyl-3-isocyanatophényl)-urée et le diisocyanate de tétraméthylxylylène.

5. Composition selon une ou plusieurs des revendications 1 à 4, **caractérisée en ce que** le carbodiimide polymère consiste en au moins un composé de formule (II)
R¹-(-N=C=N-R²-)ₘ-R³ (II)
dans laquelle
m correspond à un nombre entier de 2 à 500,
R¹ = R²-NCO, R²-NHCONHR⁴, R²-NHCONR⁴R⁵ ou R²-NHCOOR⁶,
R² = alkylène en C₁-C₁₈, cycloalkylène en C₅-C₁₈, arylène et/ou aralkylène en C₇-C₁₈, de préférence arylène et/ou aralkylène en C₇-C₁₈,
et
R³ = -NCO, -NHCONHR⁴, -NHCONR⁴R⁵ ou -NHCOOR⁶,
dans R¹, R⁴ et R⁵ étant indépendamment l'un de l'autre identiques ou différents, et représentant un radical alkyle en C₁-C₆, cycloalkyle en C₆-C₁₀ ou aralkyle en C₇-C₁₈, et R⁶ ayant une des significations de R¹ ou représentant un radical polyester ou polyamide ou-(CH₂)ₕ-O-[(CH₂)ₖ-O]_{g}-R⁴,
avec l = 1 à 3, k = 1 à 3, g = 0 à 12, et
R⁴ = H ou alkyle en C₁-C₄.

6. Composition selon une ou plusieurs des revendications 1 à 5, **caractérisée en ce que** les masses fondues de lactame solidifiées contenant 0,1 à 5 % en poids d'au moins un carbodiimide polymère, de préférence d'au moins un carbodiimide aromatique polymère et/ou d'au moins une uretdione, et/ou contenant 0,2 à 5 % en poids d'un catalyseur choisi dans le groupe constitué par : un halogénure de lactame-magnésium, un alumo-dilactamate alcalin, un lactamate alcalin et/ou alcalino-terreux, par rapport à la masse fondue de lactame, consistent en des poudres, des pastilles, des granulats et/ou des flocons.

7. Masse fondue de lactame solidifiée contenant 0,2 à 5 % en poids d'un catalyseur choisi dans le groupe constitué par : un halogénure de lactame-magnésium, un alumo-dilactamate alcalin, un lactamate alcalin et/ou alcalino-terreux, et 0,1 à 5 % en poids d'un carbodiimide et/ou d'une uretdione, pouvant être obtenue par mélange de
a. au moins une masse fondue de caprolactame et 0,1 à 5 % en poids d'au moins un carbodiimide polymère, de préférence d'au moins un carbodiimide aromatique polymère et/ou d'au moins une uretdione, et
b. au moins une masse fondue de caprolactame et 0,2 à 5 % en poids d'au moins un catalyseur choisi dans le groupe constitué par : un halogénure de lactame-magnésium, un alumo-dilactamate alcalin, un lactamate alcalin et/ou alcalino-terreux,
à des températures de 70 à 120 °C pendant une durée de 1 à 60 secondes, puis conditionnement avec refroidissement.

8. Procédé de fabrication de polyamides coulés par polymérisation d'un ou de plusieurs des constituants selon une ou plusieurs des revendications 1 à 4 dans le moule de coulée à des températures de 100 à 160 °C.
